# DEMANDE DE BREVET EUROPEEN

(11) **EP 0 823 338 A1**
(43) Date de publication de la demande: **11.02.1998**
(21) Numéro de dépôt: 97401889.7
(22) Date de dépôt: 06.08.1997
(51) Int. Cl.: B44B 5/00

(54) **Plaque signalétique de type double**

(30) Priorité: 08.08.1996 FR 9610014
(71) Demandeur: Europe Production, 78730 Saint Arnoult en Yvelines (FR)
(72) Inventeur: Batkiewicz, Grégory, 92500 Rueil Malmaison (FR)
(74) Mandataire: Caron, Gérard

(57) **Abrégé**

Cette plaque comprend deux plaques élémentaires (1, 2) dont l'une est une plaque de base (1) en aluminium relativement épaisse et pourvue d'une couche (3) d'aspect sombre sur au moins l'une de ses faces. L'autre plaque élémentaire (2) est nettement plus mince que la plaque de base et d'aspect clair sur l'une de ces faces pour permettre la formation de caractères d'aspect sombre sur fond clair.

Les plaques élémentaires sont assemblés par une opération d'emboutissage par laquelle les bords des plaques sont solidarisés entre eux à l'aide d'un joint de sertissage (4) obtenu par repoussage de la plaque de base (1) et découpe simultanée de la périphérie de la plaque de surface (2).

Selon l'invention, la couche (3) d'aspect sombre de la plaque de base (1) est une couche formée par anodisation d'une épaisseur située entre 8 et 20 micron.

Ainsi, l'adhérence des deux plaques élémentaires entre elles est excellente surtout à la périphérie des caractères y compris à celle des îlots des caractères (O, 8 etc.) et ce pendant toute la durée de vie de la plaque minéralogique.

## Description

La présente invention est relative aux plaques signalétiques de type double, destinées à être utilisées notamment comme plaques minéralogiques d'immatriculation de véhicules.

De telles plaques sont largement répandues. Elles sont fabriquées par un assemblage de deux plaques élémentaires, généralement en aluminium, dont l'une est appelée plaque de base et a une épaisseur relativement grande, l'autre plaque étant relativement fine et formant plaque de surface.

Les plaques minéralogiques de ce type sont préfabriquées en ce sens que les deux plaques élémentaires sont assemblées en usine pour constituer des plaques vierges qui sont ultérieurement pourvues d'une immatriculation à l'aide d'une presse d'estampage spécialisée dont dispose le garagiste. Cette presse est dotée d'un jeu d'outillages composés chacun d'un poinçon et d'une matrice et correspondant aux caractères alphanumériques usuels pour permettre la numérotation des plaques vierges au gré des besoins.

Au cours de l'opération de numérotation, chaque outillage formé d'un poinçon et d'une matrice repousse hors du plan de la plaque de base, une partie du métal ayant la forme du caractère à créer, la plaque fine de surface étant découpée selon le contour du caractère et la chute correspondante évacuée. Le caractère formé apparaît alors en relief de la surface apparente de la plaque de surface et se détache par rapport à celle-ci pour conférer une bonne lisibilité à l'ensemble.

Le contraste entre les caractères et la plaque de surface peut être obtenu simplement en laissant nu le métal de la plaque de base qui, là où les caractères sont formés, fait apparaître l'aspect de l'aluminium par contraste avec l'apparence de la plaque de surface qui est en général peinte en noir.

D'autres plaques d'immatriculation comportent une plaque de surface revêtue d'un matériau rétroréfléchissant qui peut être clair, tandis que la plaque de base ayant une surface sombre fait apparaître les caractères en sombre sur fond clair. La présente invention concerne spécifiquement ce dernier type de plaques d'immatriculation qui, alors qu'elles sont esthétiquement très satisfaisantes et ont une très bonne lisibilité, posent un problème particulier en ce qui concerne la pérennité de leur assemblage et la bonne tenue des caractères au cours de leur utilisation sur un véhicule.

En effet, le procédé le plus utilisé pour assembler les plaques élémentaires et obtenir les plaques d'immatriculation vierges, consiste à estamper la plaque de base pour former un joint de sertissage périphérique repoussé hors du plan de la plaque de base de manière à former un "logement" pour la plaque de surface. Celle-ci présente avant l'assemblage une surface légèrement plus grande que ce logement et elle est découpée à la bonne dimension par une opération de découpe exécutée simultanément à l'opération d'estampage qui forme le joint de sertissage.

La solidarisation des deux plaques élémentaires est alors obtenue par un "déchirement" du métal qui laisse des irrégularités (filaments ou barbes) sur la tranche de la plaque de surface qui s'interpénètrent avec des irrégularités superficielles de la face intérieure du joint de sertissage périphérique provoquant ainsi le "grippage" entre les deux plaques.

Or, on a constaté que cette solidarisation n'est efficace que si à l'endroit du contact entre les plaques, la jonction se fait entre métaux nus. Par contre, si on prévoit une couche de peinture sur la plaque de base pour améliorer le contraste entre les caractères et le fond de la plaque de surface, la peinture provoque en quelque sorte une lubrification qui empêche le grippage et détériore, surtout à la longue, l'assemblage en donnant lieu à des bâillements fort inesthétiques.

Pour éviter cet inconvénient, on peut ménager une réserve de peinture à la périphérie de la plaque de base de manière à laisser à sa surface tournée vers la plaque de surface un filet étroit périphérique dépourvu de peinture et qui va constituer après emboutissage la paroi latérale du logement de la plaque de base. Si cette solution peut être satisfaisante pour obtenir des plaques vierges sans défauts d'assemblage, il n'en va pas de même une fois les plaques vierges immatriculées. En effet, le filet en question ne peut pas être prévu pour les caractères dont les contours sur une plaque d'immatriculation donnée ne peuvent évidemment pas être prévus au préalable. Il en résulte qu'après immatriculation, des défauts de solidarisation peuvent apparaître à la périphérie de chaque caractère, c'est-à-dire à la jonction entre le caractère en relief de la plaque de base et la découpe prévue pour ce caractère dans la plaque de surface. Le problème se pose surtout pour les parties des caractères formant ce que l'on appelle les "îlots" qui sont les parties isolées des caractères, comme par exemple le ou les centres d'un O, d'un Q, d'un 8 etc.... Dans ces zones, la matière de la plaque de surface risque même à la longue de se détacher complètement et de rendre l'immatriculation illisible.

On pourrait également tenter d'obtenir l'assemblage des plaques élémentaires par collage. Cependant, si on prévoit de la colle par exemple le long de deux lignes de colle longeant les grands bords des plaques, on obtient également un bon assemblage des plaques vierges, mais on rencontrera des difficultés après la formation des caractères qui sont du même ordre que celles apparaissant dans le cas d'une plaque de base peinte. Si par ailleurs on prévoit une couche de colle sur toute la surface des plaques, la colle non seulement rendra plus difficile l'élimination des chutes découpées dans la plaque de surface, mais elle peut également rester sur les surfaces en relief des caractères formés, découvertes par cette élimination, ce qui obligera le garagiste à effectuer un "épluchage" de la découpe dans la plaque mince et un nettoyage fastidieux et coûteux.

L'invention a pour but de proposer une solution à ce problème en permettant la réalisation de plaques d'immatriculation à caractères sombres sur fond clair exemptes de tout risque de décollement entre les plaques, que ce soit au niveau de la périphérie qu'au niveau des contours des caractères.

Elle a donc pour objet un ensemble signalétique notamment pour plaques minéralogiques du type double comprenant à l'état assemblé deux plaques élémentaires dont l'une est une plaque de base en aluminium relativement épaisse et pourvue d'une couche d'aspect sombre sur au moins l'une de ses faces, et dont l'autre est nettement plus mince que la plaque de base et d'aspect clair sur l'une de ces faces pour permettre la formation dans l'ensemble assemblé de caractères d'aspect sombre sur fond clair, l'assemblage ayant lieu par une opération d'emboutissage par laquelle la face sombre de ladite plaque de base vient en contact avec ladite plaque de surface et les bords des plaques sont solidarisés entre eux à l'aide d'un joint de sertissage obtenu par repoussage de la plaque de base et découpe simultanée de la périphérie de la plaque de surface à la dimension intérieure dudit joint de sertissage, caractérisé en ce que ladite couche d'aspect sombre de la plaque de base est une couche formée par anodisation.

Il s'est avéré qu'une telle couche anodique permet, non seulement d'assurer une protection de la plaque de base (ce à quoi on peut normalement s'attendre d'une telle couche), mais également, et ceci de façon surprenante, une très bonne solidarisation mécanique , car elle conduit au niveau du joint de sertissage au même comportement du métal de la plaque de base vis à vis de la tranche de la plaque mince que si elle était utilisée sans revêtement. Dès lors, une plaque minéralogique selon l'invention présente, du seul fait de la présence de la couche anodique, les mêmes propriétés de tenue mécanique de la plaque de surface sur la plaque de base que celles observées avec les plaques minéralogiques dont la plaque de base est constituée par du métal nu. Ainsi, la solidarisation de la plaque de surface à la plaque de base reste toujours conservée tant au niveau de leur périphérie qu'autour des caractères et surtout des îlots.

En outre, il s'est avéré qu'une plaque minéralogique selon l'invention résiste bien à l'influence de la lumière, présente une bonne tenue au brouillard salin et supporte bien le gravillonnage.

D'autres caractéristiques et avantages de l'invention apparaîtront au cours de la description qui va suivre, donnée uniquement à titre d'exemple et faite en se référant aux dessins annexés sur lesquels:
- la figure 1 est une vue en perspective avec arrachements partiels d'une plaque minéralogique selon l'invention;
- les figures 2 à 5 représentent des vues en coupe partielles et à plus grande échelle respectivement selon les lignes 2-2, 3-3, 4-4 et 5-5 de la figure 1;
- la figure 6 représente très schématiquement le procédé de préparation des plaques de base, conformément à l'invention; et
- la figure 7 représente une variante de ce procédé.

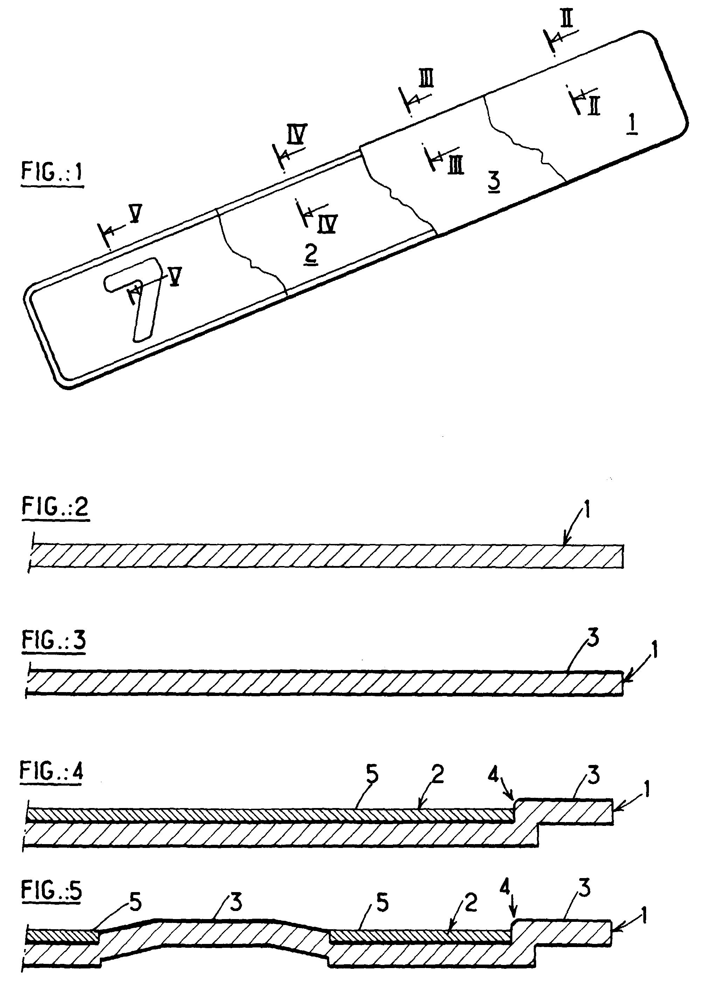

On a représenté sur les figures 1 à 5 un mode de réalisation préféré d'une plaque signalétique selon l'invention, par exemple une plaque minéralogique pour véhicule automobile. Il va de soi cependant que l'invention ne se limite pas à cette application spécifique, toute autre utilisation d'une plaque ou panneau destiné à exhiber une information pouvant être conçu selon les mêmes principes.

La plaque représentée est du type double comportant une première plaque élémentaire ou plaque de base 1 d'épaisseur relativement grande (à noter que les épaisseurs des plaques sont beaucoup exagérées sur les figures pour plus de clarté).

Cette plaque de base 1 est réalisée de préférence en aluminium ductile et, comme il apparaîtra ci-après, elle est d'aspect sombre, du moins sur l'une de ses faces.

La plaque signalétique selon l'invention comprend une deuxième plaque élémentaire ou plaque de surface 2, de préférence également en aluminium, mais d'une dureté différente de celle du métal de la plaque 1. Elle a également une épaisseur nettement plus faible que celle de la plaque 1.

La figure 1 représente par des arrachements successifs de droite à gauche diverses configurations de la plaque minéralogique selon l'invention. Ainsi, tout à droite et également sur la figure 2, la plaque 1 est représentée nue.

Plus à gauche et sur la figure 3, cette même plaque est représentée recouverte sur chaque face d'une couche de coloration sombre 3. Bien que fonctionnellement seule une couche 3 soit nécessaire, c'est-à-dire sur la face tournée vers la plaque 2, on voit qu'une telle couche sombre est représentée sur ses deux faces. La présence des ses deux couches résulte du procédé mis en oeuvre selon l'invention pour fabriquer la plaque.

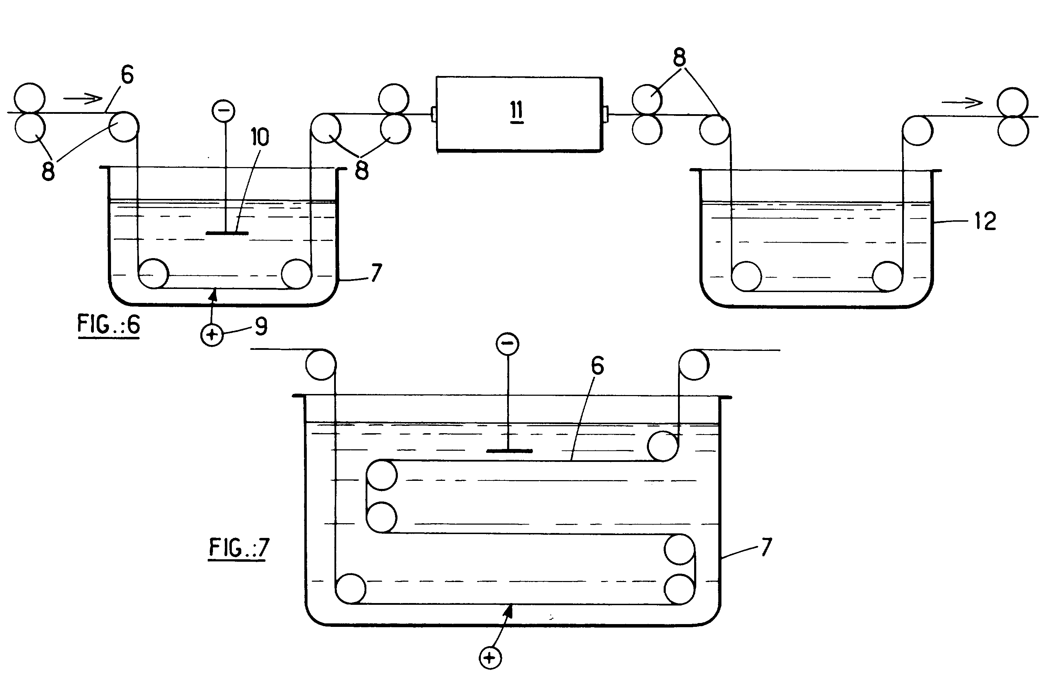

Encore plus à gauche et sur la figure 4, la plaque de surface 2 est assemblée à la plaque de base 1 par déformation à froid ou emboutissage de la périphérie de la plaque 1 et découpe simultanée de la plaque de surface 2 qui avant ces opérations présente une dimension légèrement plus grande que sa dimension définitive.

On voit que lors de l'assemblage, il se forme à la périphérie découpée de la plaque de surface 2 un joint de solidarisation ou de sertissage 4 délimitant dans la plaque de base un logement dans lequel est maintenue la plaque de surface 2 par "grippage" mutuel des matières des deux plaques. La plaque de surface 2 est revêtue d'une couche de coloration 5 d'aspect clair ou du moins contrasté par rapport à la couche de revêtement 3, un matériau, de préférence rétroréfléchissant, pouvant convenir à cet effet. L'assemblage ainsi réalisé des deux plaques conduit à la formation de la plaque minéralogique vierge qui pourra être distribuée au garagiste.

Tout à gauche de la figure 1 et également sur la figure 5, la plaque minéralogique est représentée numérotée. On voit qu'un caractère numérique (ici un sept) a été embouti dans la plaque de base 1 avec découpe simultanée de la plaque de surface 2. Pendant cette opération, le caractère est repoussé à travers l'ouverture pratiquée dans la plaque de surface 2 pour apparaître en relief à la face visible de celle-ci. On obtient donc une plaque minéralogique dont l'information a un aspect sombre et se détache sur un fond clair.

La couche anodique 3 d'aspect sombre, (et de préférence noir), est produite par un procédé d'anodisation. Il existe de nombreux procédés d'anodisation produisant des couches anodiques sombres ou noires. Ces procédés comportent habituellement des étapes de
- dégraissage,
- de préparation de surface,
- d'anodisation en bain à base d'acide sulfurique, d'acide chromique, d'acide sulfurique ou carboxylique organique, ou des mélanges d'entre eux, et
- de coloration chimique (à l'aide de pigments minéraux ou de teintures organiques, ou électrolytique (à l'aide de bains au nickel ou à l'étain).

Pour plus de détails concernant les procédés d'anodisation, on pourra se référer à des ouvrages tels que les suivants:

J. LEFEBVRE, "Traitements anodiques de l'aluminium et de ses alliages" Techniques de l'Ingénieur, Traité de Métallurgie M1630,
- A.W. BRACE et P.G. SHEASBY, "The technology of anodizing aluminium", Janvier 1979, Editions Technicopy Ltd Stonehouse,
- AITE, "Traitements de surface: aluminium, titane, magnésium et leurs alliages", Collection des cahiers de l'AITE, Ed. Galvano Organo,
- S. WERNICK, R. PENNER et P.G. SHEASBY, "The surface treatment and finishing of aluminium and its alloys" 1985, 5ième Ed.

Il existe également de nombreux procédés de coloration électrolytiques disponibles dans le commerce faisant appel à des électrolytes commercialisés par exemple sous les marques Eurocolor (Péchiney, France), Sandocolor (Sandoz, Suisse), Metacolor (Métachimie, RFA).

Selon un mode d'exécution du procédé pouvant avantageusement être utilisé dans l'invention, l'anodisation est réalisé en continu (figure 6) en partant d'une bande d'aluminium 6 ayant la largeur de la plaque de base non encore emboutie (voir figure 1, référence 1). Toutes les valeurs chiffrées ci-après ne sont données qu'à titre strictement illustratif.

Une telle bande 6 est déroulée d'une couronne (non représentée), puis après avoir subie les opérations de préparation décrites ci-dessus, elle passe dans une première cuve 7. Celle-ci est remplie d'une solution d'acide sulfurique ayant une concentration de 10% (pH=1). La température du bain peut être de 20°C. La bande 6 passe sur des rouleaux de guidage 8 convenablement disposés et elle est reliée au pôle positif 9 d'une source de courant continu dont le pôle négatif est constitué par une ou plusieurs électrodes 10 plongées dans la partie supérieure du bain au-dessus de la bande 6 qui y défile. La tension de la source peut être de 45 V et la densité de courant de 1 à 1,2 A/dm².

L'épaisseur de la couche anodique apportée peut varier et est située de préférence entre 8 et 20 microns, une valeur de 12 microns étant préférée pour constituer un bon compromis entre les contraintes techniques et les contraintes économiques.

La bande 6 peut ne faire qu'une passe dans le bain comme représenté sur la figure 6, mais afin de pouvoir augmenter la vitesse de défilement (pour une épaisseur donnée de la couche anodique), il est avantageux, comme représenté sur la figure 7, d'amener la bande 6 à faire plusieurs passes dans la cuve 7 en le faisant défiler selon plusieurs méandres.

Il s'est avéré que des vitesses de défilement entre 60 et 120 m/min peuvent facilement être atteintes.

La bande 6 passe ensuite dans une station de rinçage et de nettoyage 11 puis elle entre dans une deuxième cuve 12 dans laquelle elle subit une opération de coloration.

Celle-ci peut être de nature chimique ou électrolytique comme indiqué ci-dessus et elle consiste essentiellement à faire pénétrer des pigments dans les micropores qui, de façon connue se forment lorsque la couche anodique est déposée. Bien entendu, la bande peut effectuer une ou plusieurs passes comme pendant l'opération de revêtement anodique.

Après avoir subi de nouveau une ou plusieurs opérations de nettoyage de rinçage et de séchage, la bande est découpée pour l'obtention des plaques de base de la longueur et de la largeur voulue.

## Revendications

1. Ensemble signalétique notamment pour plaques minéralogiques du type double comprenant à l'état assemblé deux plaques élémentaires (1, 2) dont l'une est une plaque de base (1) en aluminium relativement épaisse et pourvue d'une couche (3) d'aspect sombre sur au moins l'une de ses faces, et dont l'autre (2) est nettement plus mince que la plaque de base et d'aspect clair sur l'une de ces faces pour permettre la formation dans l'ensemble assemblé de caractères d'aspect sombre sur fond clair, l'assemblage ayant lieu par une opération d'emboutissage par laquelle la face sombre de ladite plaque de base vient en contact avec ladite plaque de surface et les bords des plaques sont solidarisés entre eux à l'aide d'un joint de sertissage (4) obtenu par repoussage de la plaque de base (1) et découpe simultanée de la périphérie de la plaque de surface (2) à la dimension intérieure dudit joint de sertissage (4), caractérisé en ce que ladite couche (3) d'aspect sombre de la plaque de base (1) est une couche formée par anodisation.

2. Ensemble signalétique suivant la revendication 1, caractérisé en ce que l'épaisseur de ladite couche (3) d'aspect sombre est située entre 8 et 20 microns.

3. Ensemble signalétique suivant la revendication 2, caractérisé en ce que l'épaisseur de la couche (3) d'aspect sombre est de 12 microns.

4. Ensemble signalétique suivant l'une quelconque des revendications précédentes caractérisé en ce que la couleur de ladite couche (3) d'aspect sombre est noire.

5. Plaque minéralogique caractérisée en ce qu'elle est obtenue par emboutissage de plusieurs caractères alphanumériques dans un ensemble signalétique suivant l'une quelconque des revendications précédentes, lesdits caractères formant constituant en combinaison un numéro d'immatriculation, ladite plaque de surface étant revêtue d'une couche de coloration (5) contrastant avec la couche (3) d'aspect sombre de ladite plaque de base (1).

6. Plaque minéralogique suivant la revendication 5, caractérisée en ce que ladite couche de coloration claire (5) est formée par un matériau rétroréfléchissant.
